# EUROPÄISCHE PATENTANMELDUNG

(11) **EP 1 164 520 A1**
(43) Veröffentlichungstag der Anmeldung: **19.12.2001**
(21) Anmeldenummer: 01109598.1
(22) Anmeldetag: 18.04.2001
(51) Int. Cl.: G06F 17/60

(54) **Anordnung und Verfahren zur Abwicklung eines Zahlungsvorganges im Auktionshandel über ein Datennetz**

(30) Priorität: 13.06.2000 DE 10029066
(71) Anmelder: SIEMENS AKTIENGESELLSCHAFT, 80333 München (DE)
(72) Erfinder: Offer, Gero, 82205 Gilching (DE)

(57) **Zusammenfassung**

Anordnung (1) zur Abwicklung eines Zahlungsvorganges im Auktionshandel über ein IP-Netz (2), mit einem Auktions-Server (3), mit einer mit ihm gekoppelten Zahlungsabwicklungs-Einrichtung (6), die einen Guthabenspeicher (7), eine Vergleichereinheit (8) zum Vergleich von Gebotdaten mit den Guthabendaten der Bieter, und zur selbsttätigen Ausgabe eines Berechtigungssignals an einen Controller (9) des Auktions-Servers zur Ermittlung der teilnahmeberechtigten Bieter im Ergebnis des Vergleichs, aufweist.

## Beschreibung

Die Erfindung betrifft eine Anordnung zur Abwicklung eines Zahlungsvorganges im Auktionshandel über ein Datennetz, insbesondere ein IP-Netz, nach dem Oberbegriff des Anspruchs 1 sowie ein Verfahren nach dem Oberbegriff des Anspruchs 6.

Eine erhebliche Anzahl von Auktionsgeschäften werden immer noch über öffentliche Versteigerungen durchgeführt und die Zahlungsvorgänge über die althergebrachten Bankwege abgewickelt.

In letzter Zeit gewinnt das Internet immer mehr an Bedeutung nicht nur als Einkaufsquelle im Handel mit Software, Büchern, Reisen usw. sondern auch als eine Möglichkeit, am Auktionsgeschäft weltweit online teilzunehmen. Die Auktionsgeschäfte im Internet werden über Auktions-Server betrieben. Die Zahlungsvorgänge bei solchen Auktionsgeschäften werden nach wie vor über die herkömmlichen Bankprozesse abgewickelt.

Somit besteht die Gefahr, daß zugeschlagene Gebote nicht abgedeckt sind, was nicht nur ein langwieriges Mahnverfahren, sondern auch zusätzliche Kosten sowohl für den Auktions-Einlieferer als auch für den Auktionator mit sich bringt.

Selbst wenn das Auktionsgeschäft korrekt abgelaufen ist, könnte in einem gegenseitigen Einvernehmen zwischen dem Einlieferer und dem Bieter das Auktionsgeschäft rückgängig gemacht werden. Falls die zu versteigernde Ware mit Fehlern behaftet ist, könnte der Bieter seinerseits eine Rückgängigmachung des Geschäfts verlangen. Eine solche Rückgängigmachung des Auktionsgeschäfts bringt die Gefahr mit sich, daß die dem Auktionator zustehende Provision von den Teilnehmern nicht entrichtet wird.

Der Erfindung liegt daher die Aufgabe zugrunde, eine Anordnung und ein Verfahren zu einer sicheren und unkomplizierten Abwicklung eines Zahlungsvorganges im Auktionshandel unter Nutzung eines Datennetzes anzugeben.

Diese Aufgabe wird hinsichtlich ihres Vorrichtungsaspektes durch eine Anordnung mit den Merkmalen des Anspruchs 1 und hinsichtlich ihres Verfahrensaspektes durch ein Verfahren mit den Merkmalen des Anspruches 6 gelöst.

Die Erfindung schließt den wesentlichen Gedanken der Bereitstellung einer Zahlungsabwicklungs-Einrichtung ein, die bei einem Serviceprovider (Auktionator) geführt wird und die mit einem bekannten Auktions-Server zur Abwicklung eines Auktionsgeschäftes im Internet gekoppelt wird. Somit kann nicht nur das Auktionsgeschäft von dem Auktionator kontrolliert und durchgeführt werden, sondern auch der eigentliche Zahlungsvorgang bei einem erfolgreich abgeschlossenen Gebot.

Weiterhin schließt die Erfindung den Gedanken ein, nur solche Einlieferer und Bieter zur Teilnahme an einem solchen Auktionsgeschäft zuzulassen, die ein ein elektronisches Guthaben mit einem entsprechenden Mindestguthaben bei einem autorisierten Auktionator eröffnet haben, und zwar nur zu Zwecken des Auktionsgeschäftes. Das elektronische Guthaben ist sowohl von dem Auktionator als auch von dem Bieter jederzeit überprüfbar, wobei der Bieter die Möglichkeit erhält, nicht nur vor, sondern auch während einer Auktion bis zu dem Zeitpunkt des erfolgreichen Abschlusses eines Gebotes das Volumen seines elektronischen Guthabens zu ändern.

Die ständige Überprüfung des elektronischen Guthabens des Bieters und der Vergleich dieser Daten mit den jeweiligen Gebotsdaten durch eine Vergleichereinheit führt dazu, daß im Ergebnis dieses Vergleiches Bieter aus der Teilnahme an der Auktion mangels ausreichendem Guthaben ausgeschlossen werden. Somit können nur gültige Gebote, d. h. nur solche, die durch entsprechende elektronische Guthaben gedeckt sind, zu einem erfolgreichen Abschluß des Auktionsgeschäfts führen. Durch eine in der Zahlungsabwicklungs-Einrichtung vorgesehene zusätzliche Speichereinheit zur Speicherung und Sperrung dieses Teils des elektronischen Guthabens, welcher der Höhe des Höchstgebotes entspricht, ermöglicht einen sicheren und unkomplizierten Zahlungsvorgang, selbst wenn parallel auf zwei Auktionen geboten wird.

In einer vorteilhaften Ausführung der Erfindung ist es vorgesehen, daß der Auktions-Server eine Speichereinheit aufweist, die einen Speicherbereich mit Bieteridentifizierungs-Daten enthält, die dem Einlieferer grundsätzlich nicht übermittelt werden und somit die Anonymität des Bieters gewährt wird. Bei dieser Lösung ist es für den Ablauf des Auktionsgeschäfts und für die Abwicklung des Zahlungsvorganges ausreichend, wenn der Bieter lediglich unter einer Code-Nummer handelt, da der sichere Zahlungsvorgang durch ein ausreichendes elektronisches Guthaben gewährleistet wird.

In einer weiteren vorteilhaften Ausführung der Erfindung ist es vorgesehen, daß der Einlieferer über eine Schnittstelle seines Endgerätes einerseits mit seinem Bank- und/oder Kreditkarteninstitut verbunden ist und andererseits über eine Authentisierungseinheit der Zahlungsabwicklungs-Einrichtung auf dem Guthaben-Speicherbereich zugreifen kann, um sein elektronisches Guthaben nach der Auktion zu ändern.

Eine weitere vorteilhafte Ausführung der Erfindung sieht vor, daß die Zahlungsabwicklungs-Einrichtung Bonitätsobergrenzen enthält, für die der Auktionator eine spätere Abwicklung und Zahlung über reguläre Zahlungswege (Banken) anstelle der Bietenden garantiert. Dies ist vor allem beim B2B Auktionen sinnvoll, bei denen größere Geschäfte unter Wahrung der Anonymität geschlossen werden. Abwicklung und Zahlung finden dann über den Auktionator statt, Geldbeträge müssen nicht in der Zahlungsabwicklungs-Einrichtung gehalten werden.

Weiterhin ist in einer zweckmäßigen Ausführungsform der Erfindung vorgesehen, daß das Bieter-Endgerät eine Schnittstelle zur Verbindung einerseits mit seinem Bank- und/oder Kreditkarteninstitut und andererseits zur Verbindung mit dem Guthabenspeicher der Zahlungsabwicklungs-Einrichtung über eine Authentisierungseinheit aufweist. Somit kann der Bieter selbständig sein elektronisches Guthaben verwalten und während einer Auktion die Möglichkeit nutzen, das Guthaben nötigenfalls zu erhöhen und weiterhin an der Auktion teilzunehmen. Diese Lösung erhöht die Flexibilität des Auktionshandels im Internet und ermöglicht dem Bieter mit einem Mindeststartguthaben die Teilnahme an Auktionsgeschäften mit relativ hohen Mindestgeboten.

Gemäß einem vorteilhaften Aspekt der Erfindung trägt der Auktionator durch die Handhabung der Zahlungswegdaten kein Invoice-Risiko, da vor dem Abschluß des Auktionsgeschäfts die dem Auktionator zustehende Provision automatisch auf seinem elektronischen Guthaben gutgeschrieben wird. Dieser Aspekt ist besonders wichtig bei einer Rückgängigmachung des Auktionsgeschäftes, die entweder durch ein gegenseitiges Einvernehmen zwischen dem Einlieferer und dem Bieter erfolgen kann oder aber auch nur durch den Bieter bei der Auslieferung einer fehlerhaften Ware.

Die Abwicklung eines Zahlungsvorganges im Auktionshandel könnte nicht nur über ein Datennetz, sondern auch durch eine Verknüpfung von IP-Netz und Telekommunikations-Netz, insbesondere ein Mobilfunk-Netz erfolgen, was die Flexibilität des Auktionshandels erhöht.

Die Erfindung ist hierbei grundsätzlich mit beliebigen Endgeräten ausführbar, die nach einem IP-Netz-Protokoll konfiguriert sind oder mit einem IP-Netz kommunizieren können, insbesondere mit PC's, Laptops oder WAP-fähigen Mobilfunk-Endgeräten. Mobilfunk-Endgeräte werden hierbei über entsprechende Gateway-Server, die die Verbindung zwischen dem Mobilfunk-Netz und dem IP-Netz herstellen, an den Auktions-Server angeschlossen sein, mit dem die Zahlungsabwicklungs-Einrichtung gekoppelt ist.

Die beim Auktions-Server bestehenden Verarbeitungseinrichtungen sind zweckmäßigerweise mit einer Watchdog-Funktionalität ausgestattet, d. h. sie werden erst bei Eingang eines konkreten Mindestgebot-Anforderungssignals, welches vom Einlieferer gesendet wird, aktiviert und führen dann die entsprechenden Signal- bzw. Datenübertragungen aus.

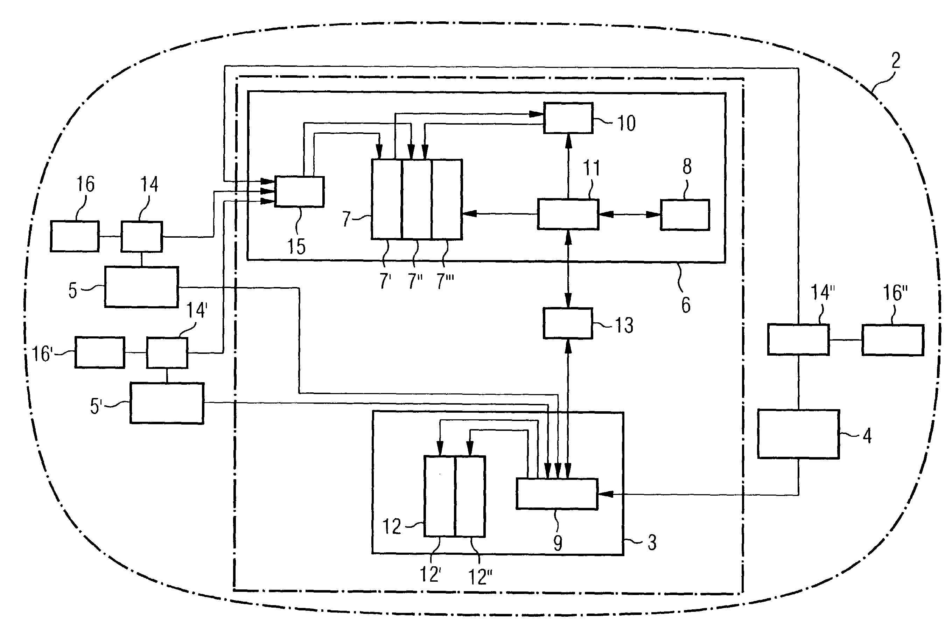

Vorteile und Zweckmäßigkeiten der Erfindung ergeben sich im übrigen aus den Unteransprüchen sowie der nachfolgenden Beschreibung eines bevorzugten Ausführungsbeispiels anhand der Figur.

Diese zeigt schematisch eine Anordnung 1 zur Abwicklung eines Auktionshandelsgeschäfts und eines entsprechenden Zahlungsvorganges über ein IP-Netz 2 sowie den Datenfluß von einem ersten Endgerät 4 des Auktions-Einlieferers über einen Auktions-Server 3 eines autorisierten Auktionators an zweite Endgeräte 5, 5' von Auktions-Bietern.

Der Auktions-Server 3 ist seinerseits mit einer Zahlungsabwicklungs-Einrichtung 6 über ein Interface 13 verbunden und weist im Zusammenhang mit der Ausführung der Erfindung als wesentliche Komponente eine Speichereinrichtung 12 auf, die einen Bieter-Speicherbereich 12' mit gespeicherten Bieteridentifizierungs-Daten und einen Gebotsdaten-Speicherbereich 12'' mit Gebotsdaten umfaßt. Eine weitere wesentliche Komponente ist ein Controller 9, über den die Abwicklung des Auktionsgeschäftes und des Zahlungsvorganges gesteuert wird.

Die Zahlungsabwicklungs-Einrichtung 6 weist einen Kontodatenspeicher 7 mit einem ersten Speicherbereich 7', einem zweiten Speicherbereich 7'' und einem dritten Speicherbereich 7"' zur Speicherung jeweils eines elektronischen Guthabens eines Bieters, des Einlieferers und des Auktionators auf. Ein weiteres wesentliches Element der Zahlungsabwicklungs-Einrichtung 6 ist eine Steuer- und Verarbeitungseinheit 11, die die von dem Auktions-Server 3 empfangenen Daten und die in dem Guthabenspeicher 7 gespeicherten Guthabendaten überarbeitet und den eigentlichen Zahlungsvorgang steuert.

Die Zahlungsabwicklungs-Einrichtung 6 weist weiterhin eine Vergleichereinheit 8 auf, die über die Steuer- und Verarbeitungseinheit 11 einerseits mit dem Guthabenspeicher 7 und andererseits mit dem Controller 9 des Auktions-Servers 3 verbunden ist, um aktuelle Gebotsdaten mit Guthabendaten des jeweiligen Bieters zu vergleichen. Die Vergleichereinheit 8 ermittelt an dem Controller 9 diejenigen Bieter, die aufgrund der Höhe ihres elektronischen Guthabens zur Teilnahme an der jeweiligen Auktion berechtigt sind, und gibt selbsttätig ein entsprechendes Berechtigungssignal aus.

Die Zahlungsabwicklungs-Einrichtung 6 weist auch eine Zahlungs-Speichereinheit 10 auf, die mit dem Guthabenspeicher 7 über die Steuer- und Überarbeitungseinheit 11 verbunden ist. Die Zahlungs-Speichereinheit 10 dient zur Speicherung und Sperrung eines Teils des elektronischen Guthabens des Bieters, welcher dem Höchstgebot bei einem für ihn erfolgreich abgeschlossenen Auktionsgeschäft entspricht. Dieses Guthaben wird durch die Steuer- und Verarbeitungseinheit 11 unter Zugriff auf das im Speicherbereich 7' enthaltene elektronische Guthaben des Bieters in die Speichereinheit 10 transferiert und dort gespeichert.

Die Bieter-Endgeräte 5, 5' sind jeweils über eine Schnittstelle 14, 14' einerseits mit dem jeweiligen Bank-Server 16, 16' verbunden und andererseits über eine Authentisierungseinheit 15 der Zahlungsabwicklungs-Einrichtung 6 mit dem Speicherbereich 7' zum Auf- und Abbuchen eines elektronischen Guthabens. Dieser Guthabentransfer kann vor und während der Auktion vom Bieter selbst durchgeführt werden.

Das Einlieferer-Endgerät 4 ist ebenfalls über eine Schnittstelle 14'' einerseits mit einem Bank-Server 16'' und andererseits über die Authentisierungseinheit 15 der Zahlungsabwicklungs-Einrichtung 6 mit dem Speicherbereich 7'' zur Änderung seines elektronischen Guthabens nach der Auktion verbunden.

Der Auktions-Server 3 enthält (nicht dargestellte) Verbindungseinrichtungen, die mit einer Watchdog-Funktionalität ausgestattet sind. Sie werden erst bei Eingang eines konkreten Mindestgebot-Anforderungssignals vom Einlieferer-Endgerät 4 aktiviert, und erst dann die entsprechenden Signal- und Datenübertragungen ausführen. Die empfangenen MindestgebotDaten in Form eines Anfragesignals werden von dem Controller 9 zur Speicherung der Mindestgebotdaten in dem Gebotdaten-Speicherbereich 12'' unter einer Transaktionsnummer an die Speichereinheit 12 übertragen.

Weiterhin übermittelt der Controller 9 die empfangenen Mindestgebotdaten mit der jeweiligen Transaktionsnummer unter Zugriff auf den Bieter-Speicherbereich 12'' der Speichereinheit 12, welcher Bieter-Identifizierungsinformationen enthält, an alle Bieter, die zur Auktionsteilnahme durch Errichtung eines elektronischen Guthabens gemeldet sind. Die Mindestgebotdaten werden auch von dem Controller 9 an die Vergleichereinheit 8 über die Steuereinheit 10 übermittelt.

Derjenige Bieter, der an der Auktion interessiert ist, kann über sein Endgerät ein Auktions-Anmeldesignal zur Teilnahme an der jeweiligen Auktion senden. Dieses Auktions-Anmeldesignal enthält die Transaktionsnummer, unter welcher der Auktionsgegenstand gehandelt wird. Somit erhalten die Bieter die Möglichkeit gleichzeitig an mehreren Auktionen teilzunehmen. Das Auktions-Anmeldesignal wird über den Controller 9 an den Speicherbereich 12' übertragen und dort in einer Teilnehmerliste gespeichert.

Die Identifizierungsdaten der angemeldeten Bieter werden ebenso wie die Mindestgebotdaten von dem Controller 9 über die Steuer- und Überarbeitungseinheit 11 der Zahlungsabwicklungs-Einrichtung 6 an die Vergleichereinheit 8 übertragen. Die Steuer- und Überarbeitungseinheit 11 ermittelt unter Zugriff auf den jeweiligen Bieter-Speicherbereich 7' des Guthabenspeichers 7 das aktuelle elektronische Guthaben von jedem zur Teilnahme an der Auktion angemeldeten Bieter an die Vergleichereinheit 8.

Die Vergleichereinheit 8 vergleicht die empfangenen Mindestgebotdaten mit den aktuellen elektronischen Guthaben jedes Bieters. Im Ergebnis dieses Vergleichs gibt die Vergleichereinheit 8 ein Vorauswahlsignal an den Controller 9 zur Bestätigung oder Nicht-Bestätigung der Teilnahme für jeden einzelnen Bieter aus. Dieses Signal wird von dem Controller 9 auch an den jeweiligen Bieter übermittelt, wodurch bei einer Nicht-Bestätigung der Teilnahme der nicht zugelassene Bieter die Möglichkeit erhält, unter Zugriff auf sein elektronisches Guthaben bei dem jeweiligen Bankinstitut sein elektronisches Guthaben in dem Speicherbereich 7' zu erhöhen und somit an der Auktion teilzunehmen. Diese Möglichkeit besteht auch während der Auktion.

Nach der Ermittlung der teilnahmeberechtigten Bieter wird von dem Controller 9 ein Auktionsanforderungs-Signal an die Bieter gesendet, die über ihre Endgeräte 5, 5' ihre Gebote abgeben. Die von dem Controller empfangenen Gebotsdaten werden im Gebotsdaten-Speicherbereich 12'' der Speichereinheit 12 gespeichert, und das momentane Höchstgebot wird an alle Bieter übermittelt.

Diejenigen Bieter, die das aktuelle Limit überbieten, werden in der Teilnehmerliste der Speichereinheit 12 gespeichert und die zugeordneten Bieter-Speicherbereiche 7' des Guthabenspeichers 7 werden sukzessive adressiert und die gespeicherten Guthabendaten an die Vergleichereinheit 8 ausgelesen. Die Vergleichereinheit 8 vergleicht die aktuellen Gebotsdaten mit dem aktuellen elektronischen Guthaben des zur weiteren Teilnahme angemeldeten Bieters, sperrt (reserviert) für den Höchstbietenden den gebotenen Betrag, so daß eine garantierte Zahlung auch im Fall von Parallelauktionen gewährleistet ist, und sendet ein Auswahlsignal an den Controller 9 zur Bestätigung oder Nicht-Bestätigung der Teilnahme des jeweiligen Bieters. Der Controller 9 übermittelt diese Information an die Bieter, die gegebenenfalls wieder die Möglichkeit haben, unter Zugriff auf ihre Bankguthaben ihre elektronischen Guthaben zur Teilnahme an der Auktion zu erhöhen. In diesem Fall senden sie ein Korrekturanforderungssignal an den Auktionator, welches eine nochmalige Prüfung des Guthabens auslöst.

Bei einem erfolgreichen Gebot wird der entsprechende Teil des elektronischen Guthabens des jeweiligen Bieters auf der Speichereinheit 10 unter Zugriff auf ein elektronisches Guthaben in dem Speicherbereich 7' des Guthabenspeichers 7 über die Steuer- und Überarbeitungseinheit 11 in die Speichereinheit 10 transferiert und unter der jeweiligen Transaktionsnummer gesperrt. Somit wird die Transaktion beendet und der Zahlungsvorgang gesichert.

Bei der erfolgreichen Auslieferung des Auktionsgegenstandes wird der gespeicherte Teil des elektronischen Guthabens des Bieters unter Eingabe der Transaktionsnummer und PIN freigegegben und über die Steuer- und Überarbeitungseinheit 11 in denjenigen Speicherbereich 7', in dem der Einlieferer ein elektronisches Guthaben hat, transferiert.

Falls das Auktionsgeschäft wegen eines fehlerhaften Auktionsgegenstandes oder durch ein gegenseitiges Einvernehmen zwischen dem Bieter und dem Einlieferer rückgängig gemacht wird, wird der gespeicherte Betrag ebenfalls freigegeben, und zwar zur Rücktransferierung in den Guthaben-Speicherbereich 7' des entsprechenden Bieters.

Die dem Auktionator zustehende Provision wird dadurch gesichert, daß nach dem Empfang des konkreten Mindestgebot-Anforderungssignals vom Einlieferer-Endgerät 4 über die Steuer- und Überarbeitungseinheit 11 der Zahlungsabwicklungseinrichtung 6 unter Zugriff auf den Speicherbereich 7" des Guthabenspeichers 7 ein Teil des elektronischen Guthabens des Einlieferers in den Speicherbereich 7''' des Auktionators transferiert wird.

Alternativ wird ein vom Auktionator festgelegter Prozentsatz des erfolgreichen Gebotes vom Speicherbereich 7' in den Speicherbereich 7"' übertragen.

Ein weiteres nicht dargestelltes Ausführungsbeispiel der Erfindung sieht vor, die Abwicklung des Auktionsgeschäftes und des Zahlungsvorganges durch die Verknüpfung von IP-Netz und einem Mobilfunknetz zu ermöglichen. Die Erfindung kann hierbei besonders vorteilhaft mit WAP-fähigen Mobil-Endgeräten realisiert werden. Das vorgeschlagene System erhöht aber auch die Zuverlässigkeit von Auktionen althergebrachter Art, bei denen telefonische Gebote entgegengenommen werden.

Die Ausführung der Erfindung ist nicht auf die oben beschriebenen Ausführung beschränkt, sondern ebenso in einer Vielzahl von Abwandlungen möglich, die im Rahmen fachgemäßen Handelns liegen.

## Patentansprüche

1. Anordnung (1) zur Abwicklung eines Zahlungsvorganges im Auktionshandel über ein Datennetz, insbesondere IP-Netz (2), mit einem Auktions-Server (3) zur Netzverbindung zwischen einem ersten Endgerät (4) eines Auktions-Einlieferers und einem zweiten Endgerät (5, 5') eines Auktions-Bieters,
**gekennzeichnet durch**
eine mit dem Auktions-Server (3) gekoppelte Zahlungsabwicklungs-Einrichtung (6), die
- einen Guthabenspeicher (7) mit einer Mehrzahl von ersten Guthaben-Speicherbereichen (7') zur Speicherung von elektronischen Guthaben von Auktions-Bietern und
- eine Vergleichereinheit (8), die über eine Steuer- und Verarbeitungseinheit (11) mit einem Controller (9) des Auktions-Servers (3) und mit den ersten Guthaben-Speicherbereichen (7') verbunden ist, zum Vergleich von aktuellen Gebotsdaten mit den Guthabendaten der Bieter und zur selbsttätigen Ausgabe eines Berechtigungssignals an einen Controller (9) des Auktions-Servers (3) zur Ermittlung der teilnahmeberechtigten Bieter im Ergebnis des Vergleichs aufweist.

2. Anordnung nach Anspruch 1,
**gekennzeichnet durch**
eine mit dem Guthabenspeicher (7) verbundene Zahlungs-Speichereinheit (10) zur Speicherung und Sperrung desjenigen Teils des elektronischen Guthabens des erfolgreichen Bieters, der dem Höchstgebot entspricht.

3. Anordnung nach Anspruch 1 oder 2,
**dadurch gekennzeichnet, daß**
der Guthabenspeicher (7) einen separat adressierbaren zweiten Guthaben-Speicherbereich (7'') zur Speicherung eines elektronischen Guthabens des Auktions-Einlieferers sowie einen dritten Speicherbereich (7''') zur Speicherung eines dem Auktionator zugeordneten elektronischen Guthabens aufweist.

4. Anordnung nach einem der vorangehenden Ansprüche,
**dadurch gekennzeichnet, daß**
die Steuer- und Verarbeitungseinheit (11) Mittel zur Ausführung einer elektronischen Gutschrift auf das elektronische Guthaben des Einlieferers im zweiten Guthabenspeicherbereich (7'') unter Zugriff auf das elektronische Guthaben eines Bieters in einem der ersten Guthabenspeicherbereiche (7') sowie zur internen Ausführung einer elektronischen Gutschrift auf das elektronische Guthaben des Auktionators im dritten Guthabenspeicherbereich (7''') unter Zugriff auf das elektronische Guthaben des Einlieferers aufweist.

5. Anordnung nach einem der vorangehenden Ansprüche,
**dadurch gekennzeichnet, daß**
der Auktions-Server (3) eine Speichereinheit (12) aufweist, die einen Bieter-Speicherbereich (12') mit Bieteridentifizierungs-Daten und einen Gebotsdaten-Speicherbereich (12'') mit gespeicherten Gebotsdaten umfaßt.

6. Anordnung nach einem der vorangehenden Ansprüche,
**dadurch gekennzeichnet, daß**
die Bieter-Endgeräte (5, 5') jeweils eine Schnittstelle (14, 14') zur Verbindung mit jeweils einem Bank-Server (16, 16') und zur Verbindung über eine Authentisierungseinheit (15) mit dem Guthabenspeicher (7) der Zahlungsabwicklungs-Einrichtung (6) zum Auf- und Abbuchen eines elektronischen Guthabens aufweisen.

7. Verfahren zur Abwicklung eines Zahlungsvorganges im Auktionshandel über ein Datennetz, insbesondere IP-Netz,
**dadurch gekennzeichnet, daß**
- in einem Guthabenspeicher (7) einer Zahlungsabwicklungs-Einrichtung (6), die im IP-Netz (2) mit einem Auktions-Server (3) verbunden ist, elektronische Guthaben von Auktions-Bietern gespeichert werden,
- von einem Einlieferer-Endgerät (4) oder einem Auktionator-Endgerät Mindestgebotdaten an den Auktions-Server (3) gesendet und in einer Speichereinheit (12) unter einer Transaktionsnummer gespeichert werden,
- die gespeicherten Mindestgebotdaten mit der Transaktionsnummer an Bieter-Endgeräte (5, 5') sowie über eine Steuer- und Verarbeitungseinheit (11) an eine Vergleichereinheit (8) der Zahlungsabwicklungs-Einrichtung (6) übermittelt werden,
- in der Vergleichereinheit (8) die Mindestgebotdaten empfangen und unter Zugriff auf erste Guthaben-Speicherbereiche (7') des Guthabenspeichers (7) mit den Guthabendaten der Bieter verglichen werden,
- in jeder Auktionsstufe die aktuellen Gebotsdaten und die Guthabendaten der Bieter von der Vergleichereinheit (9) verglichen werden, und
- im Ergebnis des Vergleichs ein Auswahlsignal an einem Controller (9) des Auktions-Servers (3) zur Ermittlung der teilnahmeberechtigten Bieter ausgegeben wird.

8. Verfahren nach Anspruch 6,
**dadurch gekennzeichnet, daß**
bei einem erfolgreichen Gebot ein Teil des elektronischen Guthabens des Bieters in einer Zahlungs-Speichereinheit (10) der Zahlungsabwicklungs-Einrichtung (6) unter der jeweiligen Transaktionsnummer gespeichert und gesperrt wird.

9. Verfahren nach Anspruch 7 oder 8,
**dadurch gekennzeichnet, daß**
in dem Guthabenspeicher (7) der Zahlungsabwicklungs-Einrichtung (6) elektronische Guthaben des Auktions-Einlieferers in einem zweiten Guthaben-Speicherbereich (7'') und des Auktionators in einem dritten Guthaben-Speicherbereich (7''') gespeichert werden.

10. Verfahren nach einem der Ansprüche 7 bis 9,
**dadurch gekennzeichnet, daß**
die Bieter über eine Authentisierungseinheit (15) der Zahlungsabwicklungs-Einrichtung (6) zu den ersten Guthaben-Speicherbereichen (7') zugreifen und ihr elektronisches Guthaben vor und während einer Auktion ändern können.

11. Verfahren nach einem der Ansprüche 8 bis 9,
**dadurch gekennzeichnet, daß**
nach erfolgter Auslieferung des Auktionsgegenstandes durch Eingabe der Transaktionsnummer und/oder PIN vom Bieter und/ oder vom Einlieferer der in der Speichereinheit (10) gesperrte Teil des elektronischen Guthabens des Bieters freigegeben wird und über die Steuer- und Verarbeitungseinheit (11) der Zahlungsabwicklungs-Einrichtung (6) eine elektronische Gutschrift auf das elektronische Guthaben des Einlieferers in den zweiten Guthaben-Speicherbereich (7'') ausgeführt wird.

12. Verfahren nach einem der Ansprüche 8 bis 9,
**dadurch gekennzeichnet, daß**
bei Rückgängigmachung des Auktionsgeschäfts die Sperrung des zu zahlenden Teils des elektronischen Guthabens vom Einlieferer unter Eingabe der Transaktionsnummer und PIN aufgehoben wird.

13. Verfahren nach einem der Ansprüche 7 bis 12,
**gekennzeichnet durch**
einen Schritt der Ausführung einer elektronischen Gutschrift auf ein elektronisches Guthaben des Auktionators in dem dritten Guthaben-Speicherbereich (7''') unter Zugriff auf ein elektronisches Guthaben des Einlieferers im zweiten Guthaben-Speicherbereich (7'').

14. Verfahren nach einem der Ansprüche 7 bis 13,
**dadurch gekennzeichnet, daß**
der Einlieferer über die Authentisierungseinheit (15) der Zahlungsabwicklungs-Einrichtung (6) auf den Guthaben-Speicherbereich (7'') zugreifen und sein elektronisches Guthaben nach der Auktion ändern kann.
